(19) Europäisches Patentamt
European Patent Office
Office européen des brevets

(11) **EP 2 423 288 A2**

(12) **EUROPEAN PATENT APPLICATION**

(43) Date of publication:
**29.02.2012 Bulletin 2012/09**

(51) Int Cl.:
***C09J 7/02*** (2006.01)

(21) Application number: **11179436.8**

(22) Date of filing: **31.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.08.2010 JP 2010194167**

(71) Applicant: **NITTO DENKO CORPORATION Osaka (JP)**

(72) Inventors:
• **Iwata, Jun**
  **Ibaraki-shi, Osaka (JP)**
• **Kamitani, Mitsuru**
  **Ibaraki-shi, Osaka (JP)**
• **Hanai, Hiroomi**
  **Ibaraki-shi, Osaka (JP)**

(74) Representative: **Grünecker, Kinkeldey, Stockmair & Schwanhäusser Anwaltssozietät Leopoldstrasse 4 80802 München (DE)**

(54) **Pressure-sensitive adhesive tape for protecting electrode plate**

(57)    The present invention relates to a pressure-sensitive adhesive tape for protecting an electrode plate, containing: a substrate, and a pressure-sensitive adhesive layer provided on at least one side of a the substrate, in which the pressure-sensitive adhesive tape has a piercing resistance, obtained by the following calculation method, of 300 gfmm or more; and has a heat shrinkage ratio, when heating is performed at 260°C for 1 hour, of 1.0% or less in both of TD (width) direction and MD (length) direction, and in which the calculation method contains fixing the pressure-sensitive adhesive tape to a fixing plate in which a circular hole having a diameter of 11.28 mm is formed, piercing a needle of which the end of has a curvature radius of 0.5 mm to the pressure-sensitive adhesive tape at a speed of 2 mm/s under condition of 23 ± 2°C, and measuring a maximum load (gf) and a maximum elongation (mm) of the pressure-sensitive adhesive tape when the needle penetrates the pressure-sensitive adhesive tape; and the piercing resistance is calculated by the following equation (1): Piercing resistance = [Maximum load (gf)] × [Maximum elongation (mm) of the pressure-sensitive adhesive tape] × 1/2 ... (1).

**EP 2 423 288 A2**

**Description**

TECHNICAL FIELD

The present invention relates to a pressure-sensitive adhesive tape for protecting an electrode plate, and more particularly, to a pressure-sensitive adhesive tape that is used for preventing a short-circuit by attaching the tape to an inside of the battery such as a lithium ion battery.

Recently, a secondary battery such as a lithium ion battery is indispensable as an electric source of mobile devices such as a cellular phone or a laptop computer. In addition, since the lithium ion battery has high capacity and lightweight, the lithium ion battery is expected to be used as a battery for electric vehicles, and it has been required to make a higher capacity battery from now on.

As the capacity of the lithium ion battery becomes higher, especially in the case of the winding type battery, the number of windings of the winding electrode plate tends to be increased. Therefore, a thinner separator is mainly used. However, there is a problem that, in the manufacturing process, a hole may be formed in the separator by a very small impurity incorporated into the battery or by a burr existing on the electrode plate. It may cause a short-circuit between a positive-electrode plate and a negative-electrode plate, thereby generating a heat to cause, for example, a fire accident.

For preventing an inner short-circuit, there is a method for preventing hole formation when a thin separator comes in contact with a burr, by attaching a pressure-sensitive adhesive tape to an electrode edge or an electrode terminal on which the burr exists (Patent Document 1).

Recently, in accordance with the requirement of a high safety of the lithium ion battery, a pressure-sensitive adhesive tape for protecting an electrode plate that is not torn even when a burr is in contact therewith and can maintain a short-circuit prevention effect during a repeated charging and discharging, is required.

Patent Document 1: JP 10-247489 A

SUMMARY OF THE INVENTION

An object of the present invention is to provide a pressure-sensitive adhesive tape for protecting an electrode plate that is not torn even when a burr is in contact therewith and can maintain a short-circuit prevention effect even at a high temperature.

In order to solve the above problems, the present inventors made intensive investigations and have found that, if a pressure-sensitive adhesive tape that has a special piercing resistance and has a heat shrinkage ratio of 1% or less even when heated at 260°C for 1 hour is used for protecting an electrode plate, a separator may be protected from pierced by a burr or the like, and therefore, it is possible to prevent a heat generation and a fire accident caused by a short-circuit. And they have also found that, since the tape is not stripped off from an adherend by shrinking at a high temperature, it is possible to maintain a short-circuit prevention effect even during a repeated charging and discharging. The present invention has been accomplished on the basis of the above knowledge.

That is, the present invention provides a pressure-sensitive adhesive tape for protecting an electrode plate, comprising:

a substrate, and
an pressure-sensitive adhesive layer provided on at least one side of the substrate,
wherein the pressure-sensitive adhesive tape has a piercing resistance, obtained by the following calculation method, of 300 gf·mm or more; and has a heat shrinkage ratio, when heating is performed at 260°C for 1 hour, of 1.0% or less in both of TD (width) direction and MD (length) direction.

(The method for calculating a piercing resistance)

The calculation method contains fixing the pressure-sensitive adhesive tape to a fixing plate in which a circular hole having a diameter of 11.28 mm is formed, piercing a needle of which the end has a curvature radius of 0.5 mm to the pressure-sensitive adhesive tape at a speed of 2 mm/s under condition of 23 ± 2°C, and measuring a maximum load (gf) and a maximum elongation (mm) of the pressure-sensitive adhesive tape when the needle penetrates the pressure-sensitive adhesive tape. And the piercing resistance is calculated by the following equation (1):

$$\text{Piercing resistance} = [\text{Maximum load (gf)}] \times [\text{Maximum elongation (mm) of the pressure-sensitive adhesive tape}] \times 1/2 \dots (1).$$

It is preferred that the pressure-sensitive adhesive tape accoridng to the invention is attached to a portion of a separator, with which an end of the electrode plate is in contact, for the purpose of preventing a short circuit.

When impurity or a burr existing on an electrode plate comes into contact with the pressure-sensitive adhesive tape for protecting an electrode plate according to the present invention, the tape is not torn but follows the impurity or burr and elongates. Therefore, by attaching the tape to an electrode plate or a separator in the battery, it is possible to prevent the occurrence of a short-circuit between electrodes caused by penetrating the separator with impurity or a burr existing on the electrode plate, thereby imparting high safety and reliability to the battery. In addition, since the pressure-sensitive adhesive tape for protecting an electrode plate according to the present invention has a heat shrinkage ratio of 1% or less when heated at 260°C for 1 hour, the tape is not stripped off from an adherend by shrinking even at a high temperature. Therefore, even when an inside of the battery is in a high temperature atmosphere due to a repeated charging and discharging of the battery, the tape is not stripped off from the electrode plate or the separator, such that it is possible to maintain a short-circuit prevention effect.

BRIEF DESCRIPTION OF THE DRAWINGS

FIG. 1 is a schematic cross-sectional view showing one embodiment of the pressure-sensitive adhesive tape for protecting an electrode plate according to the present invention.

FIG. 2 is a schematic cross-sectional view showing another embodiment of the pressure-sensitive adhesive tape for protecting an electrode plate according to the present invention.

FIG. 3 is a schematic cross-sectional view showing another embodiment of the pressure-sensitive adhesive tape for protecting an electrode plate according to the present invention.

FIG. 4-1 is a schematic perspective view showing a piercing test method of the pressure-sensitive adhesive tape, and FIG. 4-2 is a schematic cross-sectional view showng an elongation measuring method of the pressure-sensitive adhesive tape in the piercing test.

FIG. 5 is a graph showing a relationship among a load (gf) to the pressure-sensitive adhesive tape, elongation (mm) of the pressure-sensitive adhesive tape by the load, and piercing resistance of the pressure-sensitive adhesive tape.

FIGs. 6-1 to 6-3 are schematic views showing an example of the use of the pressure-sensitive adhesive tape for protecting an electrode plate according to the present invention in a lithium ion battery: FIG. 6-1 is a view before use; FIG. 6-2 is a view showing attachment of the pressure-sensitive adhesive tape for protecting an electrode plate according to the present invention to an electrode plate or the like; and FIG. 6-3 is a view showing the electrode plate wound and fixed by using the pressure-sensitive adhesive tape for protecting an electrode plate according to the present invention.

FIG. 7 is a schematic view showing an example of the use of the pressure-sensitive adhesive tape for protecting an electrode plate according to the present invention in an aluminum electrolytic condenser.

DESCRIPTION OF REFERENCE NUMERALS AND SIGNS

| 1: | Substrate |
| 2, 2A, 2B: | Pressure-sensitive adhesive layer |
| 3: | Intermediate layer |
| 4: | Pressure-sensitive adhesive tape for protecting an electrode plate |
| 5A, 5B: | Fixing plate |
| 6: | Piercing needle |

7: Electrode terminal

8: Positive-electrode plate

9: Negative-electrode plate

10: Separator

11: Active material

12: Electrode foil

MODES FOR CARRYING OUT THE INVENTION

Hereinafter, embodiments of the present invention will be described in detail with reference to the drawings, as necessary.

The pressure-sensitive adhesive tape for protecting an electrode plate according to the present invention contains a substrate and a pressure-sensitive adhesive layer on at least one side of the substrate. In particular, a piercing resistance calculated by the following method is 300 gf·mm or more, and both of the heat shrinkage ratios in the TD (width) direction and in the MD (length) direction, when heated at 260°C for 1 hour, are 1.0% or less.

Piercing resistance calculation method

Under the condition of $23 \pm 2°C$, the pressure-sensitive adhesive tape is fixed to a fixing plate in which a circular hole having a diameter of 11.28 mm is formed, the tape is pierced with a needle of which the end has a curvature radius of 0.5 mm at a speed of 2 mm/s , and a maximum load (gf) and a maximum elongation (mm) of the pressure-sensitive adhesive tape are measured when the needle penetrates the pressure-sensitive adhesive tape. The piercing resistance is then obtained by the following equation (1).

Piercing resistance = [Maximum load (gf)] × [Maximum elongation (mm) of the pressure-sensitive adhesive tape] × 1/2 (1)

[Pressure-sensitive adhesive layer]

As for a pressure-sensitive adhesive agent constituting the pressure-sensitive adhesive layer in the present invention, it is preferred that the agent has an iodine value, which represents the unsaturation degree and is measured in accordance with JIS K 0070 (1992) is 10 or less (more preferably, 5 or less) and/or the unsaturation degree obtained by the NMR method is 0.5 [$10^{-2}$ mol/g] or less (more preferably, 0.1 [$10^{-2}$ mol/g] or less). The compound in which the iodine value exceeds 10 and the unsaturation degree obtained by the NMR method exceeds 0.5 [$10^{-2}$ mol/g] tends to be eluted to the electrolytic solution [for example, ethylene carbonate / diethyl carbonate (1 : 1)] in the battery and react with electrolytes (various salts) to promote combination with another component or self-decomposition of the electrolyte, thereby deteriorating the electrolytic solution. The pressure-sensitive adhesive agent constituting the pressure-sensitive adhesive layer according to the present invention means a non-volatile component containing the following base polymer, and particularly, is component(s) that is obtained by applying a coating agent containing the following base polymer onto a substrate and volatilizing volatile component(s).

Here, the unsaturation degree obtained by the NMR method is a value calculated from a peak area of protons derived from olefin obtained in proton NMR measurement on the basis of peak areas of the samples having a known unsaturation degree as standards.

The base polymer constituting the pressure-sensitive adhesive layer according to the present invention is not particularly limited, but includes, for example, known polymers such as rubber-based polymers, acryl-based polymers and silicone-based polymers.

The rubber-based polymers may be a natural rubber or various synthetic rubbers. Examples of the synthetic rubbers include, for example, polyisoprene rubber, styrene-butadiene (SB) rubber, styrene-isoprene (SI) rubber, styrene-isoprene-styrene block copolymer (SIS) rubber, styrene-butadiene-styrene block copolymer (SBS) rubber, styrene-ethylene-butylene-styrene block copolymer (SEBS) rubber, styrene-ethylene-propylene-styrene block copolymer (SEPS) rubber, styrene-ethylene-propylene block copolymer (SEP) rubber, reclaimed rubber, butyl rubber, polyisobutylene, or modificates thereof.

In the present invention, among these rubbers, polyisoprene rubber, styrene-ethylenebutylene-styrene block copolymer (SEBS) rubber, styrene-ethylene-propylene-styrene block copolymer (SEPS) rubber, butyl rubber or the like is preferably used in view of the fact that they are hard to be eluted to the electrolytic solution and even when they are eluted to the electrolytic solution, the reactivity with the electrolyte in the electrolytic solution is low, therefore it is possible to prevent deterioration of the electrolytic solution.

Examples of the acryl-based polymers include, for example, a polymer formed of a main monomer, a a comonomer, a functional group-containing monomer and the like.

The main monomer includes a monoer that imparts an adhesion property, and examples thereof include alkyl (meth)acrylate esters having a straight or branched alkyl group having 1 to 20 carbon atoms, such as methyl (meth) acrylate, ethyl (meth)acrylate, propyl (meth)acrylate, isopropyl (meth)acrylate, n-butyl (meth)acrylate, isobutyl (meth) acrylate, s-butyl (meth)acrylate, t-butyl (meth)acrylate, pentyl (meth)acrylate, isopentyl (meth)acrylate, hexyl (meth) acrylate, heptyl (meth)acrylate, octyl (meth)acrylate, 2-ethylhexyl (meth)acrylate, isooctyl (meth)acrylate, nonyl (meth) acrylate, isononyl (meth)acrylate, decyl (meth)acrylate, isodecyl (meth)acrylate, undecyl (meth)acrylate, dodecyl (meth) acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate and eicosyl (meth)acrylate. Here, "(meth) acryl" means "acryl" and/or "methacryl".

Among the above monomers, alkyl (meth)acrylate esters having an alkyl group having 4 to 12 carbon atoms are preferable, and 2-ethylhexyl acrylate (2EHA) and n-butyl acrylate (BA) are particularly preferable.

The content of the main monomer is preferably 50 to 100 wt% and more preferably 70 to 100 wt% based on the total amount (100 wt%) of the monomer components constituting the acryl-based polymer.

The comonomer includes a monomer that imparts an adhesive property or a cohesion property, and examples thereof include vinyl group-containing compounds, such as vinyl acetate, vinyl propionate, vinyl ether, styrene, acrylonitrile and methacrylonitrile.

The content of the comonomer is preferably less than 20 wt% and more preferably less than 10 wt% based on the total amount (100 wt%) of the monomer components constituting the acryl-based polymer.

Examples of the functional group-containing monomer include, for example, carboxyl group-containing monomers, such as (meth)acrylic acid, itaconic acid, maleic acid, fumaric acid, crotonic acid, isocrotonic acid (including acid anhydride group-containing monomers such as maleic anhydride and itaconic anhydride); hydroxyl group-containing monomers, including hydroxyalkyl (meth)acrylate such as 2-hydroxyethyl (meth)acrylate, 2-hydroxypropyl (meth)acrylate, 3-hydroxypropyl (meth)acrylate, 4-hydroxybutyl (meth)acrylate, and 6-hydroxyhexyl (meth)acrylate, vinyl alcohol, and allyl alcohol; amide group-containing monomers, such as (meth)acrylamide; N-substituted amide group-containing monomers, such as N-methyl (meth)acrylamide, N-ethyl (meth)acrylamide, N,N-dimethyl (meth)acrylamide, N-t-butyl (meth)acrylamide, N-methylol (meth)acrylamide, N-methoxymethyl (meth)acrylamide, N-ethoxymethyl (meth)acrylamide, N-butoxymethyl (meth)acrylamide, N-octyl acrylamide and N-hydroxyethyl acrylamide; amino group-containing monomers, such as aminoethyl (meth)acrylate, dimethylaminoethyl (meth)acrylate, diethylaminoethyl (meth)acrylate, dimethylaminopropyl (meth)acrylate, and t-butylaminoethyl (meth)acrylate; and glycidyl group-containing monomers, such as glycidyl (meth)acrylate and methylglycidyl (meth)acrylate. Among these functional group-containing monomers, the carboxyl group-containing monoers are preferred, and the acrylic acid (AA) is more preferred. The functional group-containing monomer has an effect to improve the adhesive property.

The content of the functional group-containing monomer is preferably less than 20 wt% and more preferably less than 5 wt% based on the total amount (100 wt%) of the monomer components constituting the acryl-based polymer.

The acryl-based polymers can be prepared by polymerizing the above-mentioned monomer components by a known or commonly used polymerization method. The polymerization method for preparing the acryl-based polymer may be, for example, a solution polymerization, an emulsion polymerization, a bulk polymerization or a polymerization by irradiation with an active energy beam (an active energy beam polymerization). Among the above polymerization menthods, the solution polymerization and the active energy beam polymerization is preferable and the solution polymerization is more preferable, in terms of transparency, water resistance, cost or the like.

In the above solution polymerization, various kinds of general solvents may be used. The solvent may be organic solvents including esters such as ethyl acetate and n-butyl acetate; aromatic hydrocarbons such as toluene and benzene; aliphatic hydrocarbons such as n-hexane and n-heptane; alicyclic hydrocarbons such as cyclohexane and methylcyclohexane; ketones such as methyl ethyl ketone and methyl isobutyl ketone. The solvents may be used either alone or in combination of two or more thereof.

In the polymerization for the acryl-based polymer, a polymerization initiator can be used. The polymerization initiator is not particularly limited, but can be selected from known or commonly used initiators. Examples of the polymerization initiators may be oil-soluble polymerization initiators including, for example, azo-based polymerization initiators such as 2,2'-azobisisobutyronitrile, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane), dimethyl-2,2'-azobis(2-methylpropionate); and peroxide-based polymerization initiators such as benzoyl peroxide, t-butyl hydroperoxide, di-t-butyl peroxide, t-butyl peroxybenzoate, dicoumyl peroxide, 1,1-bis(t-butylperoxy)-3,3,5-trimethylcyclohexane and 1,1-bis(t-butylperoxy)cyclododecane. These may be used either alone or in combination of two or more thereof. The amount of the polymerization initiator used is not particularly limited, but may be in a known range available as a polymerization initiator.

The acryl-based polymer may be crosslinked by adding a crosslinking agent. Examples of the crosslinking agent include, for example, various crosslinking agents such as epoxy-based compounds, isocyanate-based compounds, metal chelate compounds, metal alkoxides, metal salts, amine compounds, hydrazine compounds and aldehyde-based compounds. They may be appropriately selected depending on the functional group contained in the acryl-based polymer. The amount of the crosslinking agent used is preferably, for example, 0.1 to 10 parts by weight and more preferably 0.5 to 5 parts by weight based on 100 parts by weight of the acryl-based polymer.

Examples of the silicone-based polymers include, for example, silicone rubbers or silicone resins containing organopolysiloxane as a main component, or polymers obtained by crosslinking or polymerizing the silicone rubbers or the silicone resins by adding a crosslinking agent such as siloxane-based crosslinking agents or peroxide-based crosslinking agents.

The weight average molecular weight (Mw) of the base polymer constituting the pressure-sensitive adhesive layer according to the present invention is preferably, for example, 200,000 to 3,000,000. In particular, it is more preferably 1,000,000 to 3,000,000 in view of the fact that the polymer is hard to be eluted to an electrolytic solution and it is possible to suppress deterioration of the electrolytic solution. If the weight average molecular weight (Mw) of the base polymer is lower than the above range, a cohesion ability is decreased. Therefore, in the case where the tape is used under the environment where a high pressure is applied, such as the case where the tape is used in the battery, the pressure-sensitive adhesive layer is easily deformed and glue is easily spread from the substrate. Therefore, the pressure-sensitive adhesive layer is likely to be eluted to an electrolytic solution, thereby causing deteriorating the electrolytic solution. Meanwhile, if the weight average molecular weight (Mw) of the base polymer is higher than the above range, the pressure-sensitive adhesive layer may become excessively hard, and an adhesive strength may become insufficient, such that it tend to be difficult to attach the pressure-sensitive adhesive layer to the electrode plate. The weight average molecular weight of the base polymer can be controlled by adjusting the amount of the crosslinking agent used, and a temperature, time or concentration of monomer in polymerization.

A glass transition point (Tg) of the base polymer constituting the pressure-sensitive adhesive layer according to the present invention is preferably -20°C or less. If the glass transition point (Tg) is higher than -20°C, the pressure-sensitive adhesive layer may become hardened depending on the used temperature, and the adhesive strength may become insufficient, such that it may be difficult to attach the pressure-sensitive adhesive layer to the electrode plate.

The pressure-sensitive adhesive layer according to the present invention may contain another component in addition to the base polymer. Examples of the component include appropriate additives such as UV absorbers, tackifiers, softeners (plasticizers), fillers, antioxidants, pigments, dyes, and silane coupling agents.

Examples of the tackifiers include, for example, rosin resins and derivatives thereof, polyterphen resins, terphen phenol resins, coumarone-indene resins, petroleum-based resins, styrene-based resins or xylene-based resins.

Examples of the softeners include, for example, liquid polyethers, glycolesters, liquid polyterphenes, liquid polyacrylates, phthalic esters, and trimellitic esters.

A method for forming the pressure-sensitive adhesive layer in the present invention can employ known and commonly used methods. Examples of these methods includes a method which contains preparing a coating solution, if necessary, by diluting the base polymer and optionally an additive with a solvent (for example, toluene, xylene, ethyl acetate and methyl ethyl ketone), applying the coating solution on a substrate or an appropriate separator (for example, release paper), and then drying the coating solution.

The thickness of the pressure-sensitive adhesive layer according to the present invention is preferably, for example, in the range of 2 to 20 $\mu$m (particularly, 4 to 15 $\mu$m). If the thickness is smaller than 2 $\mu$m, since it tends to be difficult to obtain an adhesive ability required when the pressure-sensitive adhesive tape is attached to the electrode plate or the separator, and thus, it may be difficult to prevent the occurrence of a short-circuit between electrodes caused by penetrating the separator with impurity or a burr existing on the electrode plate. Meanwhile, if the thickness is larger than 20 $\mu$m, the deformation of the pressure-sensitive adhesive tape or the spread of glue from the substrate may easily occur, and thus the electrolyte may easily deteriorate.

[Substrate]

The substrate is not particularly limited, and various substrates can be used. There can be utilized an appropriate thin leaf body or laminated body of, for example, a fiber-based substrate such as cloth, non-woven fabric, felt and net; a paper-based substrate such as various papers; a metal-based substrate such as a metal foil and a metal plate; a plastic-based substrate such as a film or sheet made of various resins; a rubber-based substrate such as a rubber sheet; and a foamed body such as a foamed sheet. Examples of the material or substance of the plastic-based substrate may include polyesters (e.g., polyethylene terephthalate, polyethylene naphthalate, polybutylene terephthalate or polybutylene naphthalate), polyolefines (e.g., polyethylene, polypropylene or ethylene-propylene copolymer), polyvinyl alcohol, polyvinylidene chloride, polyvinyl chloride, vinyl chloride-vinyl acetate copolymer, polyvinyl acetate, polyamide, polyimide, polyamideimide, celluloses, fluorine-based resin, polyether, polyether amide, polyphenylene sulfide, polystyrene-based resin (e.g., polystyrene), polycarbonate and polyethersulfone.

The substrate may have a single layer shape or a multilayered shape. If necessary, in order to increase adhesion with the pressure-sensitive adhesive layer, the surface of the substrate may be subjected to a commonly used surface treatment, for example, oxidation treatment by a chemical or physical method, such as chromic acid treatment, ozone exposure, flame exposure, high pressure rapid exposure, and ionization radiation treatment.

The thickness of the substrate is not particularly limited, but may be, for example, about 8 to 100 $\mu$m, preferably 10 to 50 $\mu$m, and particularly preferably 12 to 25 $\mu$m. If the thickness of the substrate is smaller than the above range, the strength of the pressure-sensitive adhesive tape becomes excessively low, such that practicability may be damaged. Meanwhile, if the thickness of the substrate is larger than the above range, a volume occupied in the battery may become excessively large, such that it tends to be difficult to implement a high capacity of the battery. In addition, repelling force may be excessively increased when the pressure-sensitive adhesive tape is bent, such that it tends to be difficult to use the tape inside a winding type battery.

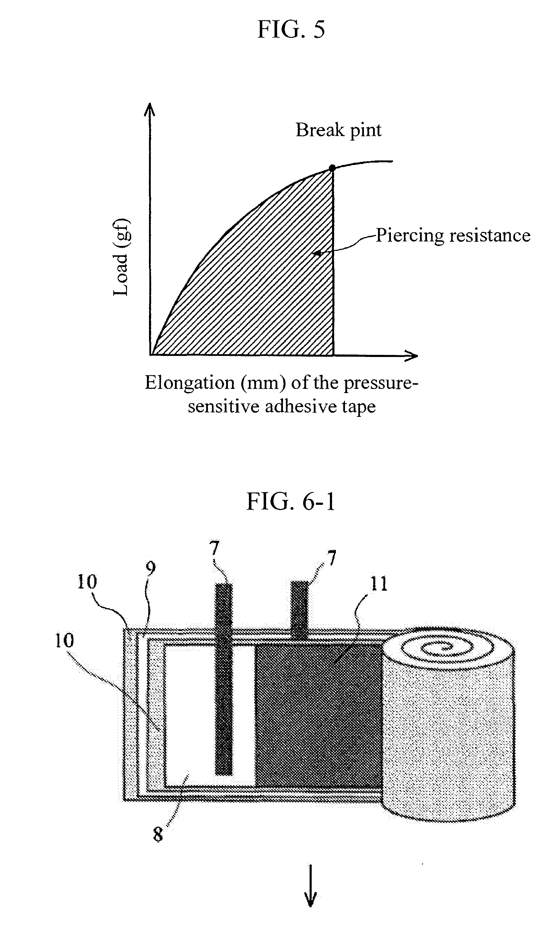

The substrate according to the present invention preferably has the piercing resistance, calculated by the above method, of 300 gf·mm or more (for example, 300 to 1700 gf·mm, more preferably, 300 to 1600 gf·mm, particularly preferably, 500 to 1500 gf·mm). If the piercing resistance is smaller than the above range, it tends to be difficult to impart a function of protecting a separator from a burr or incorporated impurity existing on the electrode plate to the pressure-sensitive adhesive tape. The piercing resistance in the present invention is calculated by the above method, and approximately corresponds to a total load (an area of a diagonal line portion in FIG. 5) applied until the pressure-sensitive adhesive tape is broken.

The substrate according to the present invention is preferably the substrate that is hardly dissolved in an electrolytic solution, thereby hardly deteriorating the electrolytic solution.

As the substrate according to the present invention, a plastic-based substrate formed of polyimide, polyamide, polyamideimide or polyphenylene sulfide is preferably used.

The substrate according to the present invention preferably has both of the heat shrinkage ratios in the TD (width) direction and in the MD (length) direction of 1.0% or less (more preferably, 0.8% or less, and particularly preferably, 0.5% or less) when heating is performed at 260°C for 1 hour. Further the substrate is preferably a plastic-based substrate formed of polyimide, polyamide, polyamideimide, or polyphenylene sulfide, and especially, is a substrate prepared by a film forming process without a stretching process. If the heat shrinkage ratio is larger than the above range, the pressure-sensitive adhesive tape attached to an electrode plate or separator may be lifted off or stripped off therefrom when the inside of the battery becomes high temperature environment by repeating charging and discharging of the battery, such that it tends to be difficult to maintain a short-circuit prevention effect.

As the substrate according to the present invention, a commercial product such as "Kapton 50H", "Kapton 100H", and "Kapton 200H" (trade names, all are manufactured by DuPont-Toray Co., Ltd.), may be appropriately used.

[Pressure-sensitive adhesive tape for protecting an electrode plate]

The pressure-sensitive adhesive tape for protecting an electrode plate according to the present invention is a pressure-sensitive adhesive tape having an pressure-sensitive adhesive layer on at least one side of a substrate. A plurality of pressure-sensitive adhesive layers may be provided. For example, the pressure-sensitive adhesive tape may be a single-coated pressure-sensitive adhesive tape having a pressure-sensitive adhesive layer on one side of a substrate, or may be a double-coated pressure-sensitive adhesive tape having pressure-sensitive adhesive layers on both sides of a substrate. In addition, the pressure-sensitive adhesive tape may have another layer (for example, an intermediate layer for increasing adhesion between the substrate and the pressure-sensitive adhesive layer) unless it damages the effect of the present invention.

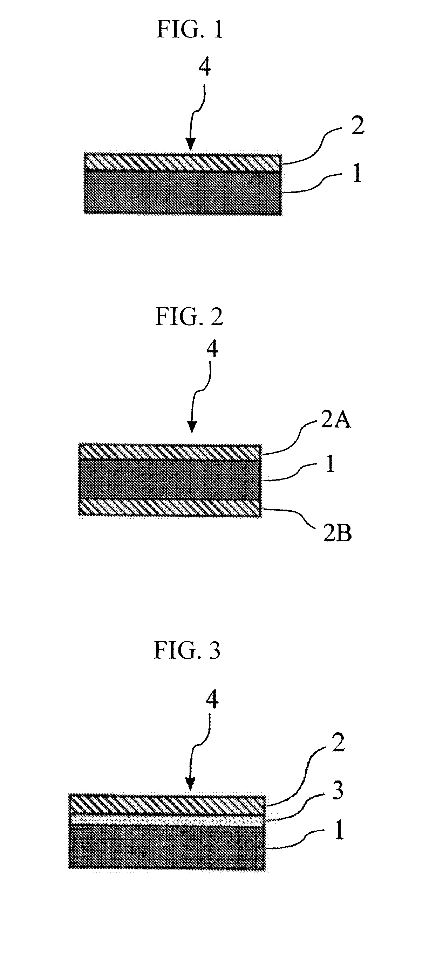

FIG. 1 is a schematic cross-sectional view showing one embodiment of the pressure-sensitive adhesive tape 4 for protecting an electrode plate according to the present invention. The pressure-sensitive adhesive layer 2 is provided on one side of the substrate 1.

FIG. 2 is a schematic cross-sectional view showing another embodiment of the pressure-sensitive adhesive tape 4 for protecting an electrode plate according to the present invention. Pressure-sensitive adhesive layers 2A and 2B are provided on both sides of the substrate 1. When this pressure-sensitive adhesive tape is attached to an electrode or an electrode plate, it is possible to simultaneously fix a separator in the portion being in contact with the electrode or the electrode plate, and it is possible to reduce friction caused by expansion or shrinking of the pressure-sensitive adhesive tape under high temperature, as a result, it is possible to efficiently implement a short-circuit prevention effect.

FIG. 3 is a schematic cross-sectional view showing another embodiment of the pressure-sensitive adhesive tape 4 for protecting an electrode plate according to the present invention. The pressure-sensitive adhesive layer 2 is provided on one side of the substrate 1, and the intermediate layer 3 is provided therebetween.

As a method for manufacturing the pressure-sensitive adhesive tape for protecting an electrode plate according to the present invention, a known and commonly used method may be adopted, for example, a method containing preparing a coating solution containing the base polymer and applying the coating solution directly onto a substrate to form a laminated body of substrate/pressure-sensitive adhesive layer, or a method containing applying the coating solution onto an appropriate separator (e.g., release paper) to form an pressure-sensitive adhesive layer, and transferring the pressure-sensitive adhesive layer onto a substrate to form a laminated body of substrate/pressure-sensitive adhesive layer. In the case of the transferring, a void may remain at an interface with the substrate. In this case, the void can be diffused and dissipated by performing heating and pressing treatment by an autoclave treatment or the like.

Moreover, in the pressure-sensitive adhesive tape for protecting an electrode plate according to the present invention, a separator (release liner) may be provided on the surface of the pressure-sensitive adhesive layer in view of protection of the surface of the pressure-sensitive adhesive layer and prevention of blocking. The separator is removed when the pressure-sensitive adhesive tape for protecting an electrode plate according to the present invention is attached to an adherend, but may not necessarily be provided. The separator to be used is not particularly limited, but a known and commonly used release paper or the like may be used. For example, there can be used a substrate having a release layer such as a plastic film or paper, of which surface is treated with a release agent such as silicones, long chain alkyls, fluorines, and molybdenum sulfides; a low adhesive substrate formed of a fluorine-based polymer such as polytetrafluoroethylene, polychlorotrifluoroethylene, polyvinyl fluoride, polyvinylidene fluoride, tetrafluoroethylene-hexafluoropropylene copolymer, and chlorofluoroethylene-vinylidene fluoride copolymer; and a low adhesive substrate formed of a nonpolar polymer such as olefine-based resins (for example, polyethylene and polypropylene).

In the case where the pressure-sensitive adhesive tape for protecting an electrode plate according to the present invention is a double-coated pressure-sensitive adhesive tape, the separator may be provided on the surfaces of both of the pressure-sensitive adhesive layers of the pressure-sensitive adhesive tape for protecting an electrode plate according to the present invention. Alternatively, a separator having a rear side release layer may be provided on one pressure-sensitive adhesive surface of the pressure-sensitive adhesive tape, such that the rear side release layer of the separator comes into contact with the surface of the other pressure-sensitive adhesive surface on the opposite surface of the pressure-sensitive adhesive tape by winding the sheet.

The pressure-sensitive adhesive tape for protecting an electrode plate according to the present invention obtained by the above method has a piercing resistance, calculated by the above method, of 300 gf·mm or more (for example, 300 to 1700 gf·mm, more preferably, 300 to 1700 gf·mm, and particularly preferably, 500 to 1500). Accordingly, by attaching the tape to an electrode plate or a separator, it becomes possible to prevent hole formation in the separator caused by a burr or impurity existing on the electrode plate, thereby preventing short-circuit between a positive-electrode plate and a negative-electrode plate.

Further, in the pressure-sensitive adhesive tape for protecting an electrode plate according to the present invention obtained by the above method, both of the heat shrinkage ratios in the TD (width) direction and in the MD (length) direction are 1.0% or less (more preferably, 0.8% or less, and particularly preferably 0.5% or less) when heating is performed at 260°C for 1 hour. Therefore, the pressure-sensitive adhesive tape attached to an electrode plate or separator is neither lifted off nor stripped off therefrom even when the inside of the battery becomes high temperature environment by repeating charging and discharging of the battery, such that it is possible to maintain a short-circuit prevention effect.

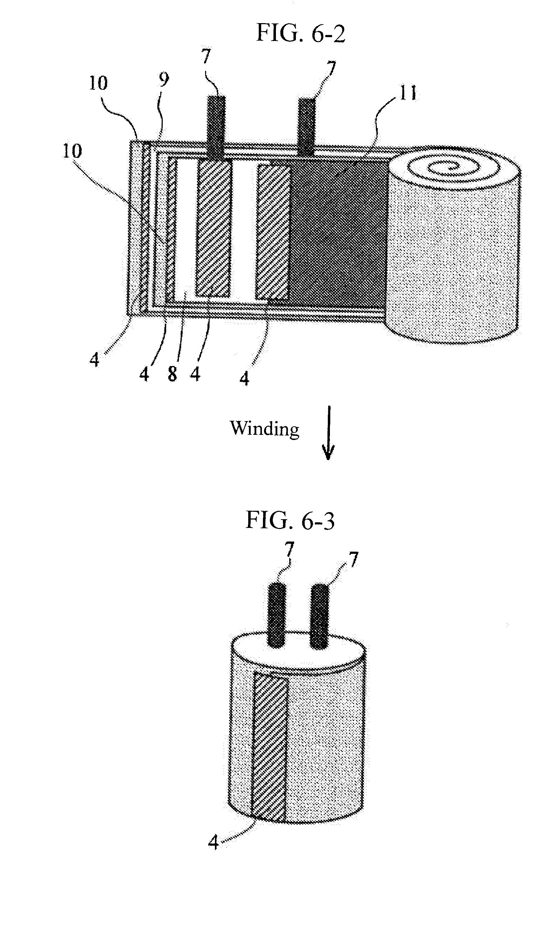

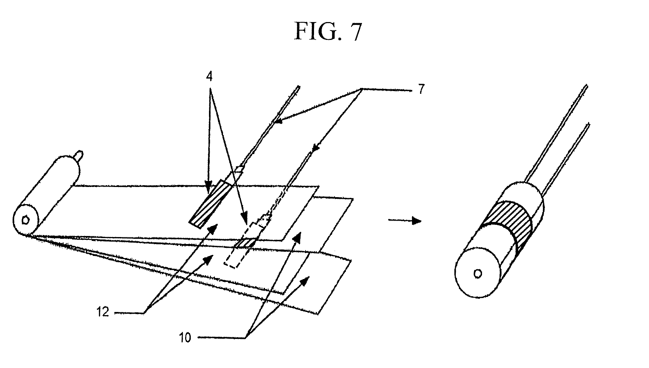

The lithium ion battery has a configuration that a winding type electrode group in which a positive-electrode plate obtained by coating a positive-electrode active material on a positive-electrode core body and a negative-electrode plate obtained by coating a negative-electrode active material on a negative-electrode core body are provided facing each other with a separator therebetween, and they are wound in a vortex form; electrode terminals drawn from the positive-electrode plate and the negative-electrode plate; and an electrolytic solution, are sealed in an external can. In addition, an aluminum electrolytic condenser has a configuration that a device main body formed by winding anode aluminum foil/separator/cathode aluminum foil; electrode terminals drawn from the anode foil and the cathode foil; and an electrolytic solution, are sealed in an external can. The pressure-sensitive adhesive tape for protecting an electrode plate according to the present invention is used for the purpose of preventing penetration of an impurity or burr to a separator, and improving an insertion competence of an electrode into a battery case (for example, for the purpose of winding and fixing a winding end of the winding type battery and preventing stripping off of the active material), in the manufacturing process of a lithium ion battery or an aluminum electrolytic condenser. The attachment position is not particularly limited as long as the above object can be accomplished. For example, the tape may be attached to an inside portion of a lithium ion battery, an aluminum electrolytic condenser or the like (for example, an electrode terminal, an electrode plate end, a portion of the separator with which an end of the electrode plate is in contact, an end of the active material and a winding end) (refer to FIGs. 6-1 to 6-3 and FIG. 7).

EXAMPLES

Hereinafter, the present invention is described in detail by Examples, but the present invention is not limited thereto.

Example 1

A coating solution 1 was prepared by diluting 100 parts by weight of polyisoprene rubber (trade name: "Kraton IR-307", manufactured by Kraton Polymer Japan, Ltd., weight average molecular weight: $2.76 \times 10^6$) with toluene.

The obtained coating solution 1 was applied on a polyimide film having a thickness of 13 μm (trade name: "Kapton 50H", manufactured by DuPont-Toray Co., Ltd.) so that the thickness after drying was 10 μm, and drying the solution, to thereby obtain a pressure-sensitive adhesive tape 1.

Example 2

A pressure-sensitive adhesive tape 2 was obtained in the same manner as in Example 1, except that a polyimide film (trade name: "Kapton 100H", manufactured by DuPont-Toray Co., Ltd.) having a thickness of 25 μm was used instead of the polyimide film (trade name : "Kapton 50H", manufactured by DuPont-Toray Co., Ltd.) having a thickness of 13 μm.

Example 3

A pressure-sensitive adhesive tape 3 was obtained in the same manner as in Example 1, except that a polyimide film (trade name: "Kapton 200H", manufactured by DuPont-Toray Co., Ltd.) having a thickness of 50 μm was used instead of the polyimide film (trade name: "Kapton 50H", manufactured by DuPont-Toray Co., Ltd.) having a thickness of 13 μm.

Comparative Example 1

A pressure-sensitive adhesive tape 4 was obtained in the same manner as in Example 1, except that a polyethylene terephthalate film (trade name: "LUMIRROR", manufactured by Toray Industries Inc.) having a thickness of 100 μm was used instead of the polyimide film (trade name: "Kapton 50H", manufactured by DuPont-Toray Co., Ltd.) having a thickness of 13 μm.

Comparative Example 2

A pressure-sensitive adhesive tape 5 was obtained in the same manner as in Example 1, except that a polyphenylene sulfide film (trade name: "TORELINA", manufactured by Toray Industries Inc.) having a thickness of 16 μm was used instead of the polyimide film (trade name: "Kapton 50H", manufactured by DuPont-Toray Co., Ltd.) having a thickness of 13 μm.

Comparative Example 3

A pressure-sensitive adhesive tape 6 was obtained in the same manner as in Example 1, except that a polyphenylene sulfide film (trade name: "TORELINA", manufactured by Toray Industries Inc.) having a thickness of 25 μm was used instead of the polyimide film (trade name: "Kapton 50H", manufactured by DuPont-Toray Co., Ltd.) having a thickness of 13 μm.

The heat shrinkage ratio and piercing resistance of the pressure-sensitive adhesive tapes obtained in the Examples and Comparative Examples were measured by the following method.

[Heat shrinkage ratio]

The test samples were obtained by cutting the pressure-sensitive adhesive tapes obtained in the Examples and the Comparative Examples into a size of 50 mm × 50 mm.

Each obtained test sample was maintained in the hot air oven adjusted to 260°C for 1 hour. After that, the test sample was taken from the hot air oven, the sizes of the TD (width) direction and MD (length) direction were measured [$L_{TD}$ (mm), $L_{MD}$ (mm)], and the heat shrinkage ratios (%) of the pressure-sensitive adhesive tape was calculated by the following equation.

Heat shrinkage ratio (TD direction) (%) = (50 - $L_{TD}$) /50 × 100
Heat shrinkage ratio (MD direction) (%) = (50 - $L_{MD}$) /50 × 100

[Piercing resistance]

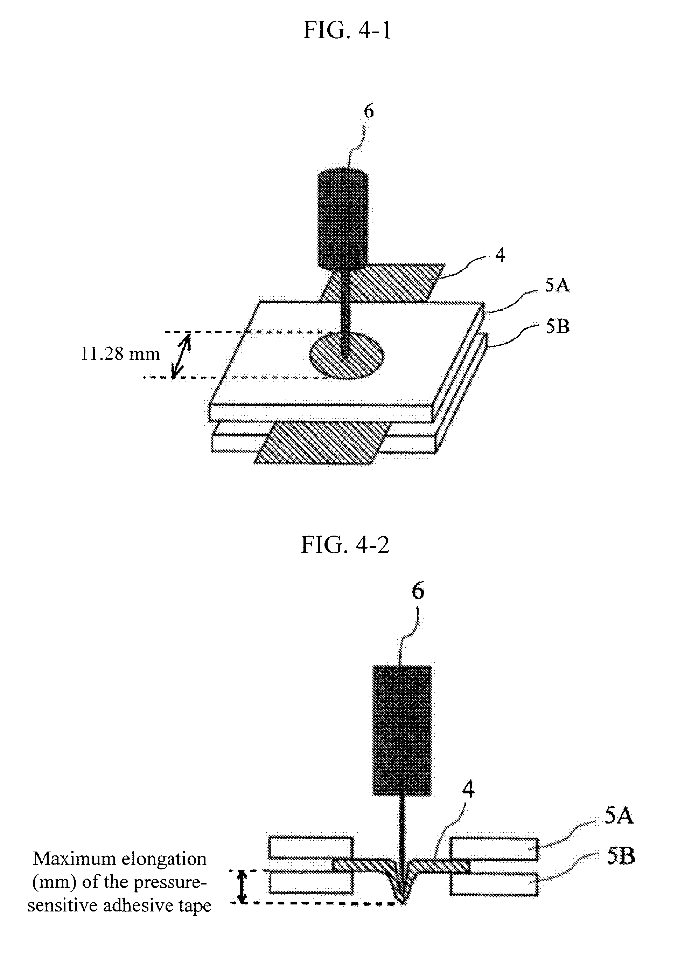

By using the compression test meter (trade name: "KES-G5", manufactured by Kato Tech Co., Ltd., a circular hole having a diameter of 11.28 mm), the piercing test of the pressure-sensitive adhesive tapes obtained in the Examples and the Comparative Examples was performed under the following condition, and the piercing strength [maximum load (gf) at the break point], and maximum elongation (mm) of the pressure-sensitive adhesive tape were observed (refer to, e.g., FIG. 4). Then, the piercing resistance (gf ·mm) was calculated by the following equation.

Piercing resistance = [Maximum load (gf)] × [Maximum elongation (mm) of the pressure-sensitive adhesive tape] × 1/2
Measurement condition
Temperature: 23 ± 2°C
Piercing needle: needle of which the end has a curvature radius of 0.5 mm
Piercing speed: 2 mm/s

The above evaluation results are shown in the following Table.

Since the pressure-sensitive adhesive tape 3 obtained in Example 3 and the pressure-sensitive adhesive tape 4 obtained in Comparative Example 1 were not penetrated in the piercing test, the piercing resistance was calculated by taking the maximum load (gf) as the upper limit of the measured value of 1000 gf.

[TABLE 1]

| | Heat Shrinkage ratio (%) | | Maximum Load (gf) | Maximum Elongation of the Tape (mm) | Piercing Resistance |
|---|---|---|---|---|---|
| | MD Direction | TD Direction | | | |
| Example 1 | 0.4 | 0.6 | 400 | 1.50 | 300 |
| Example 2 | 0.2 | 0.3 | 650 | 2.00 | 650 |

(continued)

| | Heat Shrinkage ratio (%) | | Maximum Load (gf) | Maximum Elongation of the Tape (mm) | Piercing Resistance |
|---|---|---|---|---|---|
| | MD Direction | TD Direction | | | |
| Example 3 | 0.3 | 0.4 | 1000 or more | 2.80 | 1400 |
| Comparative Example 1 | 10.0 | 18.0 | 1000 or more | 4.00 | 2000 |
| Comparative Example 2 | 2.0 | 6.0 | 400 | 1.35 | 270 |
| Comparative Example 3 | 4.0 | 8.0 | 600 | 1.53 | 460 |

While the present invention has been described in detail and with reference to the specific embodiments thereof, it will be apparent to one skilled in the art that various changes and modifications can be made therein without departing from the spirit and scope thereof.

The present application is based on Japanese Patent Applications No. 2010-194167 filed on August 31, 2010 and No. 2011-173725 filed on August 9, 2011, and the entire contents thereof are incorporated herein by reference. All references cited herein are incorporated in their entirety.

**Claims**

1. A pressure-sensitive adhesive tape for protecting an electrode plate, comprising:

   a substrate, and
   a pressure-sensitive adhesive layer provided on at least one side of the substrate,
   wherein the pressure-sensitive adhesive tape has a piercing resistance, obtained by the following calculation method, of 300 gf·mm or more; and has a heat shrinkage ratio, when heating is performed at 260°C for 1 hour, of 1.0% or less in both of TD (width) direction and MD (length) direction, and
   wherein the calculation method comprises fixing the pressure-sensitive adhesive tape to a fixing plate in which a circular hole having a diameter of 11.28 mm is formed, piercing a needle of which the end has a curvature radius of 0.5 mm to the pressure-sensitive adhesive tape at a speed of 2 mm/s under condition of 23 ± 2°C, and measuring a maximum load (gf) and a maximum elongation (mm) of the pressure-sensitive adhesive tape when the needle penetrates the pressure-sensitive adhesive tape; and the piercing resistance is calculated by the following equation (1):

$$\text{Piercing resistance} = [\text{Maximum load (gf)}] \times [\text{Maximum elongation (mm) of the pressure-sensitive adhesive tape}] \times 1/2 \dots (1).$$

2. The pressure-sensitive adhesive tape according to claim 1, wherein the pressure-sensitive adhesive tape is attached to an electrode terminal and/or an end of the electrode plate.

3. The pressure-sensitive adhesive tape according to claim 1, wherein the pressure-sensitive adhesive tape is attached to a portion of a separator, with which an end of the electrode plate is in contact.

## FIG. 1

## FIG. 2

## FIG. 3

FIG. 4-1

FIG. 4-2

## FIG. 5

Load (gf)

Break pint

Piercing resistance

Elongation (mm) of the pressure-sensitive adhesive tape

## FIG. 6-1

## FIG. 6-2

Winding

## FIG. 6-3

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10247489 A
- JP 2010194167 A
- JP 2011173725 A